# EUROPÄISCHE PATENTSCHRIFT

(11) **EP 1 449 346 B1**
(45) Veröffentlichungstag und Bekanntmachung des Hinweises auf die Patenterteilung: **12.09.2007**
(21) Anmeldenummer: 02796557.3
(22) Anmeldetag: 02.12.2002
(51) Int. Cl.: H04L 29/06, H04L 29/12, H04L 29/08

(54) **BROWSERFÄHIGES KOMMUNIKATIONSSYSTEM SOWIE CLIENT UND SERVER FÜR EIN SOLCHES KOMMUNIKATIONSSYSTEM**
BROWSER-ENABLED COMMUNICATION SYSTEM AND CLIENT AND SERVER FOR ONE SUCH COMMUNICATION SYSTEM
SYSTEME DE COMMUNICATION APTE A LA NAVIGATION, ET CLIENT ET SERVEUR POUR SYSTEME DE COMMUNICATION DE CE TYPE

(30) Priorität: 30.11.2001 DE 10158739
(43) Veröffentlichungstag der Anmeldung: 25.08.2004
(73) Patentinhaber: Harman Becker Automotive Systems GmbH, 76307 Karlsbad (DE)
(72) Erfinder: BEHRENS, Ralph, 31174 Schellerten (DE); KUZ, Volker, 38106 Braunschweig (DE); KOEPPEN, Jan, 76307 Karlsbad (DE); LAPPE, Dirk, 76228 Hohenwettersbach (DE)
(74) Vertreter: Grünecker, Kinkeldey, Stockmair & Schwanhäusser Anwaltssozietät
(86) Internationale Anmeldenummer: PCT/EP2002/013609
(87) Internationale Veröffentlichungsnummer: WO 2003/047201

(56) Entgegenhaltungen:
- WO-A-01/19102
- WO-A-01/84804
- GB-A- 2 361 560
- US-B1- 6 253 326
- "TCP/IP Tutorial and Technical Overview" August 2001 (2001-08) , IBM XP002244571 Seite 514, Zeile 12 - Zeile 14 Seite 752, Zeile 1-8; Abbildung 309
- ISO/IEC JTC1/SC29: "Coding of moving pictures and associated audio" ISO/IEC 13818-6/1998/AMD. 1: 1998(E), RETRIEVED FROM INTERNET, 10. Februar 1998 (1998-02-10), XP002259500

## Beschreibung

Die Erfindung betrifft ein browserfähiges Kommunikationssystem mit einem Server und einem Client die über ein vorgegebenes Protokoll miteinander kommunizieren gemäß den Merkmalen des Anspruchs 1.

Solche z.B. WAP-browserfähigen Kommunikationssysteme sind bereits bekannt, z.B. in Zusammenhang mit den WAP-fähigen Mobiltelephonen (Handys) aber auch mit Autoradiogeräten, wie diese von der Anmelderin unter der Bezeichnung Becker-Radio Online Pro vertrieben werden.

US 6,253,326 B1 beschreibt ein Kommunikationssystem und Verfahren zur sicheren Übertragung von Nachrichten zwischen einem Client und einem Proxy Server über eine Luftschnittstelle. Um ein adäquate Leistung und Kosteneffizienz zu erreichen, kommunizieren der Proxy Server und der Client über CTP. Dabei sendet der Client eine "CTP request" mit binären Feldern variabler Länge an den Proxy Server, der darauf eine "CTP Response" Nachricht schickt. Insbesondere ist es dem Client möglich, durch Setzen des maXRespone Parameters die Größe der "CTP Response" Nachricht zu bestimmen.

Die genannten Autoradios des Typs Online Pro weisen ein eingebautes GSM-Modul auf, mit dem es möglich ist zu telefonieren und WAP-Seiten aufzurufen. Die von einem

Server abgerufenen WAP-Seiten werden dann auf einem dreizeiligen Display angezeigt. Daneben besitzt dieses Autoradio ein eingebautes Navigationssystem. Das Navigationssystem kann aktuelle Stauinformationen von einem Server, z.B. WEB.de, auf Anforderung abrufen und unmittelbar in die berechnete Fahrtroute einbeziehen, so dass ggfs. ein bestehender Stau vom Fahrer umfahren werden kann.

Problematisch ist bei dem bekannten Verfahren folgendes: Das Wireless Application Protokoll (WAP) bietet nur begrenzte Möglichkeiten zur Kommunikation zwischen Client (Endgerät, d.h. also z.B. Handy oder Autoradio etc.) und Server. Der Client kann via Hypertext transfer protocol (HTTP) eine Anfrage mit dem Befehl HTTP-GET an den Server stellen, dabei können Parameter an den Server übertragen werden.

Bei dem bisherigen Verfahren wird eine Anfrage vom Client (OnlinePro) an den Server (WAP-Server) über einen URL-Aufruf mit angehängten Parametern getätigt. Die angehängten Parameter bestehen aus Keyword, Trennungszeichen und Wert, z.B. der nachfolgenden Art:
*Bsp . 1 :*
   *...*/*testappl.cgi?navdest=[1]DEUTSCHLAND" [2] HILDESHEIM" [3]DA IMLERRING*
*Bsp.* 2:
   *...*/*testapp12.php?param1=irgendeinwert&param2=nocheinwert...*

Die Art und Weise der Anfragen ist nach dem Verfahren des Common Gateway Interface (CGI) beschrieben.

Der Server muß seine Antwort in einem verständlichen Format an den Client senden. Die Antwort-Daten sind nach dem Verfahren der Multipurpose Internet Mail Extension (MIME-TYPE) codiert, auf die sich der Client beim Verbindungsaufbau notifiziert hat. Der WAP-Server generiert aus dieser Anfrage heraus ein Paket mit einem bestimmten MIME-Type (beispielsweise ,x-becker/vnd.wap.bim'). In diesem Paket sind die Daten im Klartext enthalten. Die Größe des Pakets ist begrenzt.

Das bekannte Verfahren bietet von sich aus jedoch keine Möglichkeit, gesichert mehr als 256 Byte vom Client an den Server zu übertragen - auch die Größe der Antwort vom Server zum Client ist in ihrer Größe beschränkt (die genaue Größe ist je nach Implementierung unterschiedlich).

Hier setzt die vorliegende Erfindung an.

Die Erfindung hat das Ziel, ein browserfähiges Kommunikatiosnsystem anzugeben, das solche Beschränkungen in der Datenkommunikation nicht kennt.

Dieses Ziel wird durch ein Kommunikationssystem mit den Merkmalen des Anspruchs 1 gelöst.

Weiterbildungen sind Gegenstand der Unteransprüche.

Erfindungsgemäß ist unter einem Browser ein Surfprogramm zum Surfen im Internet zu verstehen.. Es dient zum Abrufen und Darstellen von Informationen aus dem Internet. Ein Browser setzt empfangene HTML-Seiten, in denen sich Texte, Bilder, Programme befinden können, grafisch um. Darüber hinaus hat der Nutzer die Möglichkeit den WWW-Browser derart einzustellen, daß beispielsweise Audio- und Videodateien mit einem spezifischen Programm angezeigt werden Bekannte Browser sind beispielsweise: Netscape Navigator, Microsoft Internet-Explorer, NSCA Mosaic, LYNX) Neben der Darstellung von WWW-( WORL WIDE WEB)-Seiten bieten WWW-Browser z.B. Dienste an wie
- E-Mail schreiben und lesen
- Dateiübertragung (vom Server zum lokalen Rechner)
- News lesen und schreiben

URL ist im Rahmen vorliegender Erfindung die bekannte Abkürzung für "Uniform Resource Locator" (einheitliche Quellen-Ortsbeschreibung). Mit Hilfe der URL werden sämtliche Informationen im Internet weltweit eindeutig addressiert. Z.B. setzt sich die URL "http://www.becker.de" zusammen aus: dem verwendeten Übertragungsprotokoll **http://** (ist für den Transport von *HTML*-Dokumenten zuständig), der Subleveldomain **www** (World Wide Web), der *Domain* becker, der *Top Level Domain* **de** (für Deutschland) und dem Pfad der entsprechenden Seite (bzw Datei) **links**. Die hierarchische Folge der einzelnen Adressbestandteile ist nötig, um zur richtigen Adresse zu gelangen. Praktischerweise können URLs in HTML-Seiten als *Links* dienen, über die der Benutzer per Mausklick von Website zu Website surfen kann.

Unter einem browserfähigen Kommunikationsystem ist ein Kommunikationssystem zu verstehen, das mit Hilfe eines Browsers Kommunikationsdaten zwischen Teilnehmern überträgt.

Wesentlicher Bestandteil des Kommunkationssystems ist das Datenübertragungs-Protokoll, mit dem die Kommunikation zwischen Client und Server aufgebaut wird. Beim erfindungsgemäßen Verfahren wird die Anfrage vom Client (OnlinePro) an den Server wie bei dem bisherigen Verfahren durch Aufrufen einer Quellen-Ortsbeschreibung, wie z.B. einer URL, mit Parametern getätigt. Das neue Verfahren überträgt allerdings nur einen Parameter, in dem ein für die Übertragung kodiertes binäres Paket enthalten ist.

Das Protokoll sorgt bei Bedarf für eine eventuelle Fragmentierung/ Defragmentierung der Pakete. Das Protokoll ermöglicht die Behandlung verschiedener Dienste mit einem Datenformat, so kann z.B. das Antwortpacket immer den selben MIME-type haben.

Mit dieser Lösung sind folgende Vorteile im Vergleich zu den beaknnten Systemen erzielt:
- größere Datenpackete werden in mehreren Schritten automatisch übertragen
- der Server kann Daten beim Client anfragen, das ist normalerweise gar nicht möglich.
- neue Dienste, die mit diesem Verfahren implementiert werden, können wesentlich schneller in Betrieb genommen werden, da nur ein mime-type erforderlich ist (keine Rekonfiguration der http-Server)
- das Protokoll ist durch Auswertung interner Taskkennungen zukunftssicher

Der Server reagiert erfindungsgemäß wie beim bekannten Verfahren wieder auf Anfragen vom Client. Allerdings ist auch hier der Paketinhalt nicht mehr wie oben beschrieben im Klartext enthalten, sondern wird wie in der dem Erfindungsantrag beiliegenden Dokumentation, binär enthalten sein.

Das hat wiederum folgende Vorteile gegenüber dem alten Verfahren:
- die übertragene Datenmenge ist kleiner (Zusammenfassung von einzelnen Werten zu Bitfolgen)
- der Inhalt ist nicht mehr für jeden ersichtlich
- Leichtere und schnellere Lesbarkeit für die Endgeräte-Software
- Realisierung eines Handshaking-Verfahrens (Übertragung mehrere Teilpakete)
- Realisierung von Serveranfragen durch Übertragung einer Antwort-Quellenortsbeschreibung (z.B. einer URL) und Realisierung des Handshakings

Im nachfolgenden wird ein konkretes Ausführungsbeispiel anhand eines Autoradios (im folgenden Client genannt) mit integrierten Navigationssystem und GSP-Modul beschrieben. In diesem Ausführungsbeispiel wird angenommen, dass die Quellen-Ortsbeschreibungen die oben erwähnten bekannten URL-Aufrufe sind und dass als Übertragungsformat das bekannte WAP-Protokoll ("Wireless Application Protocol") verwendet wird. Die Erfindung ist jedoch auf diese URL und das WAP nicht beschränkt

Über letzter WAP-Protokolle wird die Kommunikation mit einem WAP-Server ermöglicht. Es wird davon ausgegangen, dass im Autoradio der erforderliche WAP-Browser samt Datenschnittstelle vorhanden implemetiert ist. Das Autoradio ist dabei so gestaltet, dass verschiedenste Parameter zum Server übermittelt werden können, der damit in der Lage ist, für jeden Benutzer spezifische Inhalte zu generieren.

Wie in der klassischen WAP-Architektur steht auf der einen Seite der Client und auf der anderen Seite der Server. Der Client ist in der Regel der Initiator: er stellt die Verbindung her und er fordert Daten an. Der Server liefert nur angeforderte Daten und hat nicht die Möglichkeit, Anfragen zu fahren.

Der Server kann nur via SMS-Push das Endgerät veranlassen, sich mit Hilfe des WAP-Browsers bestimmte Daten zu holen. Die Datenverbindung wird über das eingebaute GSM-Modem und ein eingestelltes Zugangs-Profil hergestellt. Nach Herstellen der Verbindung wird ein gewünschtes Internet-Portal aufgerufen und alle möglichen Services als WML (Wireless Markup Language)-Seite dargestellt. Der Aufruf des Protals geschieht mit Übergabe verschiedenster Parameter, z.B.: Gerätenummer, Passwort, Fahrzeugidentifikationsnummer und Geokoordinaten als URL-Parameter.

Der Server stellt jetzt eine WAP-Seite mit Informationen zusammen, die für jeden Benutzer dynamisch erzeugt werden. Anschließend kann durch diesen Inhalt wie im herkömmlichen Sinne durch den WAP-Auftritt navigiert werden.

Wählt der Anwender beispielsweise eine Hotelsuche aus, so wird auf Serverseite der in Frage kommende Bereich in Abhängigkeit von der im Login übergebenen Position errechnet und aus der Datenbank die in Frage kommenden Hotels herausgesucht. Diese Ergebnisse werden in Form einer WML-Seite wieder an das Endgerät übermittelt.

Der Anwender sucht sich das gewünschte Hotel aus und ihm werden (wieder als WML-Seite) die ausführlichen Daten des Hotels inklusive eines Links zugesandt. Hinter diesem Link verbirgt sich ein Datenpaket, das eine Zielbeschreibung für das Navigationssystem enthält. Nach dem die Navigationsdaten übertragen worden sind, wird die Verbindung beendet.

### 1. Format der Datenpakete

Das Format der Datenpakete, die zwischen Client und Server ausgetauscht werden, wird im folgenden vorgestellt.

Neben dem MIME-Type sind auch die Formate der Datenpakete, die vom Server an den Client gesendet werden (Service-Pakete) und die vom Client an den Server gesendet werden (Anforderungspakete), beschrieben.

### 1.1 Content-/MIME-Type

Der hierfür gewählte Content- oder MIME-Type heißt z.B. **x-becker/vnd.wap.lbs.**

Der MIME-Type muß mit "x-" beginnen, um den Anforderungen der IANA (siehe www.w3c.org - RFC 1700) zu genügen. Dieses Format für die zu übertragenden Daten vom Server zum Client ist zukunftssicher, da verschiedene Services durch eine gesonderte Service-ID alleine mit diesem MIME-type behandelt werden können.

Nur Datenpakete, die diesen MIME-Type besitzen, werden entsprechend einer enthaltenen Service-ID vom Client dekodiert.

### 1.2. Service - Paket (Server)

Die Service-Pakete werden vom Serverportal an den Client auf Anforderung hin übertragen. Sie enthalten neben der Service-ID-Kennung, der Gerätenummer und einem CRC32-Check die Nutzdaten. Die Länge der Nutzdaten ist abhängig vom eingestellten Service. Somit ist dieses Format relativ flexibel.

### 1.2.1 Format des Datenpakets

Die Beschreibung dieser Pakete ist an den Syntax der MPEG2-Spezifikationen angelehnt und eine relativ leicht verständliche Pseudoprogrammiersprache. Der Protokollaufbau ist z.B. wie folgt gewählt:

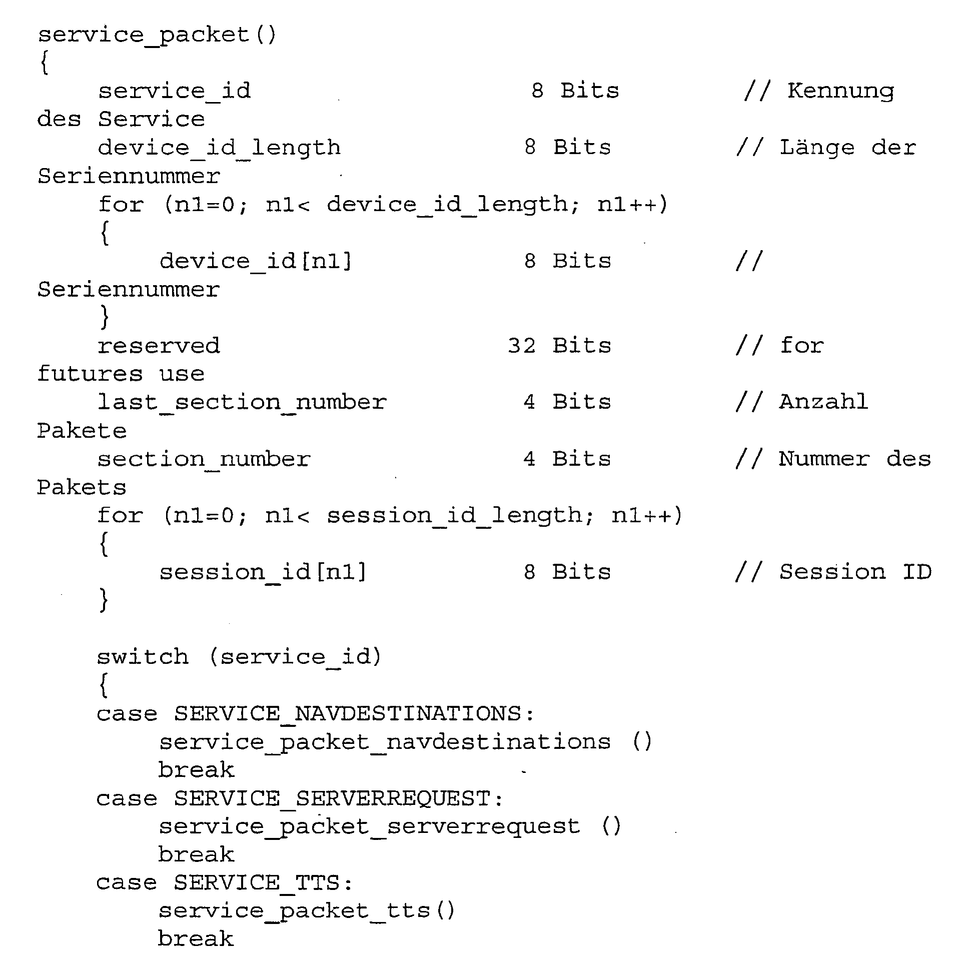

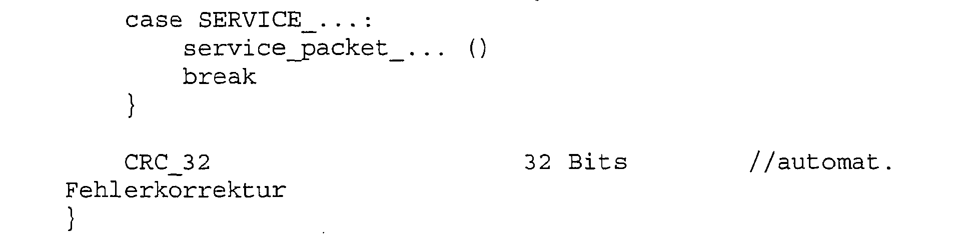

Die *service_id* ist hierbei die Kennung des jeweiligen Service. Anhand dieser 8 Bit breiten ID wird die Dekodierung der restlichen im Paket enthaltenen Daten durchgeführt. Mögliche Service-IDs können sein:

| **Parameter** | **Wert** | **Beschreibung** |
|---|---|---|
| SERVICE_NOTDEFINED | 0x00 | Rettungsanker ... |
| SERVICE_NAVDESTINATIONS | 0x01 | Pollen der übers WWW definierten |
| SERVICE_TTS | 0x02 | Text-To-Speech |
| SERVICE_SERVERREQUEST | 0xF0 | Positionsrequest vom Server |

Die *device_id* enthält die Gerätenummer. Sie wird auch als Username in einigen Teilen des Quellcodes bezeichnet.

Die beiden 4 Bit-Werte *last_section_number* und *section_number* beschreiben, wie viele Pakete dieses Typs aufeinanderfolgend übertragen werden und welche Paketnummer das aktuelle Paket hat. Das ist für künftige Versionen, in denen das Datenvolumen das normale Maß übersteigt, durchaus sinnvoll. Bei einem Ausführungsbeispiel können diese beiden Werte immer auf 1 gesetzt sein.
Für die Übertragung mehrerer Sections wird die *session_id* benötigt, die bei jedem Datenaustausch mit übertragen wird. Sie hat eine variable Länge und wird vom Server beim ersten Aufruf generiert / festgelegt. Nur anhand dieser ID weiß der Server, wer als Client eine Anfrage stellt. Über die Kombination aus *section_number, last_section_number* und *session_id* können Handshaking-Verfahren realisiert werden, wie sie beispielsweise für TDS benötigt werden.
Abgesehen von dem letzten Wert, *CRC_32,* wird die weitere Entschlüsselung abhängig von der *service_id* gemacht. Die Codierung der sogenannten Nutzdaten wird in den entsprechenden Kapiteln unten behandelt.

### 1.2.2 Service.ID SERVICE NAVDESTINATIONS

Der mit der ID SERVICE_NAVDESTINATIONS verbundene Service für die Suche nach örtlich in der Nähe liegenden Zielen ist der erste aller hier beschriebenen Services gewesen. Über diesen Service können die Navigationsdaten spezieller Ziele (Restaurants, Hotels, Bahnhöfe, Museen, etc.) angefordert werden. Die erreichbaren Zielangaben sind nicht in den 'normalen' Navigationsdaten der CD enthalten.

Dieser zusätzliche Service ermöglicht eine Art Yellow Pages für das Autoradio. Die Navigationsdaten, die hierüber angefordert werden, können einerseits über den Anforderer abgerechnet werden; andererseits aber auch demjenigen in Rechnung gestellt werden, dem das Ziel gehört (beispielsweise dem Restaurantbesitzer).

Das Format des Datenpakets sieht z.B. folgendermaßen aus:

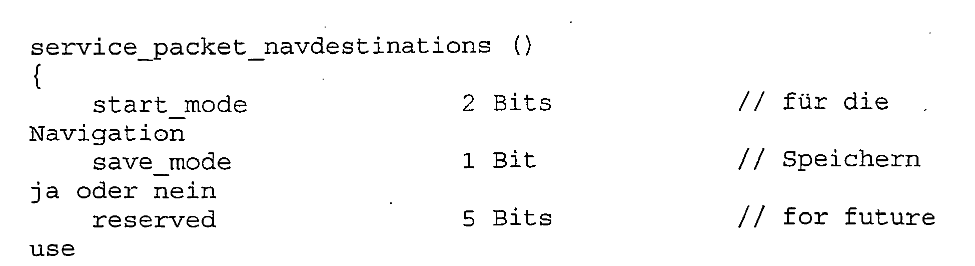

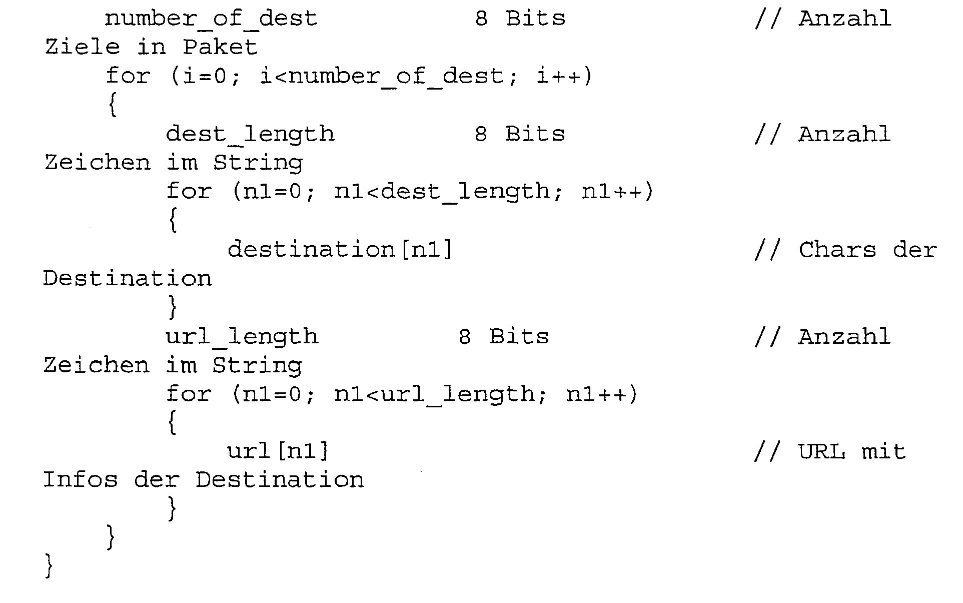

Zusätzliche Daten, z.B. eine URL pro Navigationsziel, kann je nach Definition an ein Datenpaket angehängt werden.
Wurde bei der Dekodierung der Kopfdaten die Service-ID SERVICE_NAVDESTINATIONS festgestellt, so wird die Dekodierung der Nutzdaten entsprechend dem hier aufgezeigten Syntax durchgeführt.

Die beiden Werte *start_mode* (2-Bit-Wert) und *save_mode* (1-Bit-Wert) werden für die Navigation selber benötigt. Über den Startmode wird festgelegt, ob die Navigation gleich angestartet, oder die übertragenen Ziele erst mal in den Speicher als mögliche Ziele für später geschoben werden sollen. Die hier möglichen Werte sind in nachdolgender Tabelle beschrieben.

**Tabelle : Mögliche Startmodi für die Navigation**

| **Wer** | **Bezeichnung** | **Beschreibung** |
|---|---|---|
| 0x0 | NAVISTART_NOT | Navigation nicht starten |
| 0x1 | NAVISTART_ROUTE | Navigation mit Routenoptionen |
| 0x2 | NAVISTART_IMMIDIA | Navigation sofort starten |
| 0x3 | Reserved | Reserved for future use |

Anschließend kommt in diesem Block der Wert *number_of_dest,* also die Anzahl Ziele in diesem Paket. Dann kommt eine Schleife, die genau *number_of_dest* mal durchlaufen wird. Hier werden die einzelnen Ziele ausgelesen.

### 1.2.2.1 Destinations-String

Der Destinations-String gibt das Ziel an, das übertragen wird. Der String setzt sich aus Tags, den sogenannten *selection criteria,* gefolgt von der jeweiligen Beschreibung zusammen. Die *selection criteria* stehen in eckigen Klammern und beinhalten eine Nummer (dezimal).
Der String selber sieht beispielsweise so aus:
[1] DEUTSCHLAND,, [2] HAMBURG,, [3] WENDENSTRASSE,, [256] Innovativ e Systems
[1] DEUTSCHLAND,, [124] 0 0
[1] DEUTSCHLAND, , [124] 0 -73450, , [256] McDonalds Ecuador

Es besteht ebenso die Möglichkeit, ein Ziel im WGS84-Format anzugeben. WGS-84 Koordinaten haben bei der Zielführung eine Ungenauigkeit von 50 Metern (10 Meter Nav-Tech Daten + 20 Meter Ungenauigkeit der GPS-Daten in jede Richtung)

### 1.2.3 Service-ID SERVICE SERVERREQUEST

Dieser Service ermöglicht dem Server die aktuelle Position des anfragenden Gerätes abzufragen. Für die *Location Based Services* ist diese Information unerläßlich.

Die aktuellen Geodaten können bereits beim Login in das Autoradio mit übergeben werden. Die aktuellen Geodaten werden jedoch bevorzugt über Anforderungspakete des Client an den Server geliefert.

Will der Server außer der Reihe Positionsdaten haben, dann kann dies über diesen Serverrequest gemacht werden. Wichtig ist die Funktionalität beispielsweise für das Flottenmanagement, das Absetzen eines Notrufs, Rückrufaktionen, usw.

| |
|---|
| service_packet_serverrequest () { length_of_url 8 Bits // Länge der URL for (n1=0; n1_length_of url ; n1++) { response_url [n1] // URL für die Antwort } |

Für die Antwort auf die Anfrage des Servers benötigt der Client die URL, an die er antworten soll. Sie ist an dieser Stelle angegeben. Zuerst wird die Länge der URL *length_of_url* als 8-Bit-Wert angegeben, dann kommt die eigentliche Zeichenkette.

### 1.3. Anforderungspaket (Client)

Wie bei der Serverantwort wird auch für die Anfrage der Daten vom Client auf ein eher binär orientiertes Format ausgewichen. Im Folgenden ist das Format des Datenpakets näher beschrieben.

Im Gegensatz zum Service-Packet kann hier das binäre Paket nicht einfach so übertragen werden (Push-Übertragung), sondern muss wegen der Einschränkungen des Browsers bei der Anfrage an die URL angehängt werden. Hierfür ist eine Umformung der Daten in URL-spezifische Notation erforderlich. Es ist hierbei zu beachten, dass die Länge der URL von insgesamt 256 Zeichen nicht überschritten werden sollte, weil sonst ältere Gateways auf der Übertragungsroute die Daten evtl. abschneiden können.

Durch das Übertragen der Session ID in den hin- und hergereichten Paketen braucht eine laufende Session nicht zwangsläufig durch diesen URL-Aufruf beendet werden. Beim Online-Portal der Anmelderin loggt man sich z.B: zu Beginn mit Username und Passwort ein. Ab dem Zeitpunkt befindet man sich in einer Session, in der die Daten verschlüsselt übertragen werden. Sobald man explizit aus dem Client heraus versucht einen Link mit einer selbst generierten URL aufzurufen, startet man eine neue Session, solange der Server über die Session ID nicht erkennt, dass es sich noch um die gleiche Session handelt.

### 1.3.1 Format des Datenpakets

Das Format des Datenpakets wird an das bisher bestehende angelehnt. Die Session ID kann entweder als separater Parameter an die URL angehängt oder hier mit in das Paket integriert werden. Im ersteren Fall wird die Länge der Session ID auf 0 gesetzt. Ein Beipiel hierfü könnte sein:

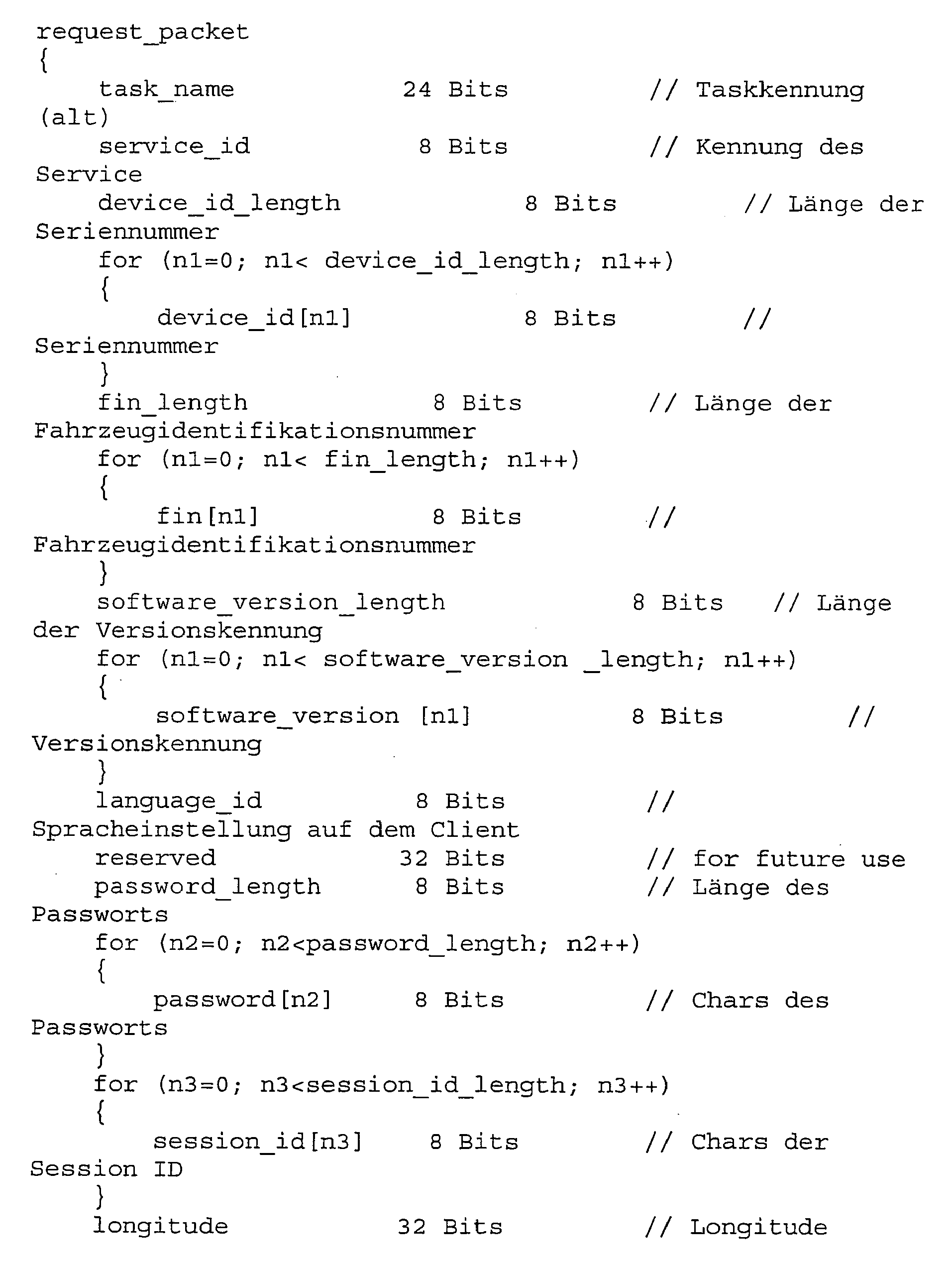

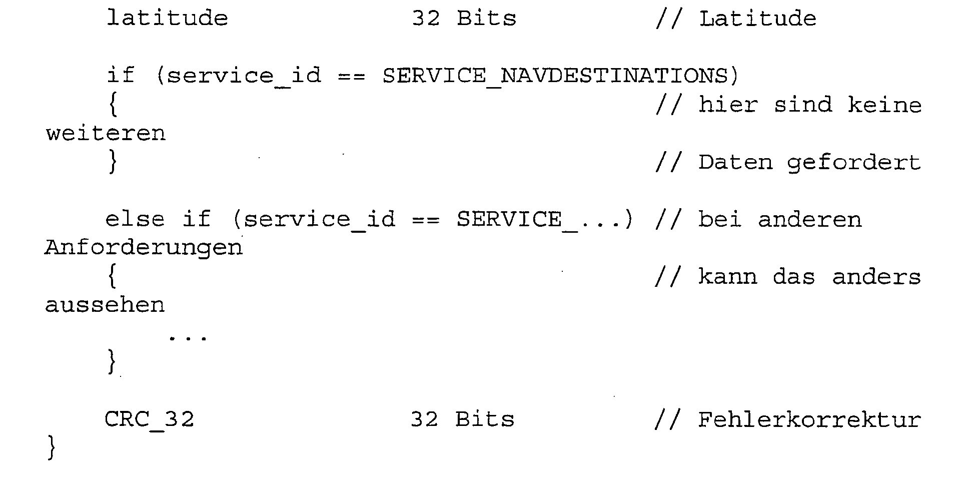

Das Tag *task_name* ist noch in diesem Format enthalten, um den Übertragung von alt zu neu leichter zu machen.

In dem Tag *service_id* steckt die eigentliche Anforderung. Hier wird die ID des Service angegeben, den der Empfänger nutzen will, also anfordert. Werden für die einzelnen Anforderungen Zusatzdaten benötigt, sind sie im unteren Teil des Pakets zu implementieren.

Die *device_id* ist wie in der Serverantwort die Gerätenummer des Clients. Sie besteht aus 14 Zeichen.

Die darauf folgenden sechs Werte beschreiben die aktuelle Position des Fahrzeugs in X- und Y-Koordinate.

## Patentansprüche

1. WAP-Browserfähiges Kommunikationssystem mit einem Server und einem Client, welche über das WAP Protokoll miteinander kommunizieren, wobei der Client dem Server über einen URL-Aufruf mit angehängten Parametern einen angebotenen Service anfordert und der Server auf den URL-Aufruf mit dem Absenden von Datenpaketen antwortet, wobei die vom Client an den URL-Aufruf angehängten Parameter ein für die Übertragung kodiertes, binäres Datenpaket mit einer Service-ID zur Kennung des angeforderten Service enthalten,
wobei der Server auf Anforderung hin Datenpakete an den Client überträgt, welche neben der Service-ID zur Kennung des angeforderten Services, eine Gerätenummer des Clients und einen Fehlererkennungscode sowie anschließend binär kodierte Nutzdaten enthalten und
wobei die Datenpakete einen Parameter, der die Anzahl der vom Server übertragenen Datenpakete anzeigt, sowie einen weiteren Parameter, der die Paketnummer des jeweiligen Pakets innerhalb der Anzahl der vom Server übertragenen Datenpakete anzeigt, enthält.

2. WAP-Browserfähiges Kommunikationssystem nach Anspruch 1, wobei die URL samt angehängter Parameter maximal 256 Zeichen lang ist.

3. WAP-Browserfähiges Kommunikationssystem nach Anspruch 1 oder 2, wobei in den an den URL-Aufruf angehängten Parametern eine Session ID zur Identifikation der Session übertragen wird, durch die ein Hand-Shake-Prozedur mit dem Server möglich ist.

4. WAP-Browserfähiges Kommunikationssystem nach Anspruch 1 oder 2, wobei die Länge der Nutzdaten variabel ist.

5. WAP-Browserfähiges Kommunikationssystem nach einem der Ansprüche 1 bis 4,
wobei die vom Server an den Client gesendeten Datenpakete eine Vielzahl von aufeinander folgenden Bits aufweisen, die nacheinander wie folgt angeordnet sind:
die Service-ID zur Kennung des angeforderten Services,
Länge der Gerätenummer des Client,
die Gerätenummer des Client,
ein weiterer reservierter Bereich für zukünftige Anwendungen,
Anzahl der vom Server übertragenen Datenpakete,
die Paketnummer des jeweiligen Datenpakets innerhalb der Anzahl der vom Server übertragenen Datenpakete,
eine Session-ID zur Identifikation der Session.

6. WAP-Browserfähiges Kommunikationssystem nach einem der Ansprüche 1 bis 5, wobei die Service-ID eine vorgegebene Bit-Breite hat, anhand der eine Dekodierung der restlichen im Datenpaket enthaltenen Daten durchführbar ist.

7. WAP-Browserfähiges Kommunikationssystem nach Anspruch 5, wobei die Session-ID eine variable Länge aufweist, die vom Server beim ersten Aufruf generiert und festgelegt wird.

8. WAP-Browserfähiges Kommunikationssystem nach einem der Ansprüche 1 bis 7, wobei einer der angebotenen Services für die Suche nach örtlich in der Nähe liegenden Zielen des Clients vorgesehen ist.

9. WAP-Browserfähiges Kommunikationssystem nach einem der Ansprüche 1 bis 8, wobei einer der angebotenen Services dazu dient, die aktuelle Position des Clients abzufragen.

10. WAP-Browserfähiges Kommunikationssystem nach einem der Ansprüche 1 bis 9, wobei der Server MIME-Type-Datenpakete auf Anfrage an den Client sendet.

11. WAP-Browserfähiges Kommunikationssystem nach einem der Ansprüche 1 bis 10 wobei der Client als Endgerät oder Teil eines Endgerätes innerhalb eines Kommunikationssystems eines Kraftfahrzeuges ausgebildet ist.

12. WAP-Browserfähiges Kommunikationssystem nach Anspruch 11, wobei der Client in ein Autoradio oder Navigationssystem eingebaut ist.

13. Ein Server zur Verwendung in einem WAP-Browserfähigem Kommunikationssystem mit dem Server und einem Client, wobei der Server angepasst ist mit dem Client über das WAP Protokoll zu kommunizieren,
wobei der Server angepasst ist auf eine Anforderung durch einen, einen angebotenen Service anfordernden URL-Aufruf mit angehängten Parametern des Clients mit dem Absenden von Datenpaketen zu antworten, wobei die vom Client an den URL-Aufruf angehängten Parameter ein für die Übertragung kodiertes, binäres Datenpaket mit einer Service-ID zur Kennung des angeforderten Service enthalten,
wobei der Server angepasst ist, auf Anforderung hin Datenpakete an den Client zu übertragen, welche neben der Service-ID zur Kennung des angeforderten Services, eine Gerätenummer des Clients und einen Fehlererkennungscode sowie anschließend binär kodierte Nutzdaten enthalten, und
wobei die Datenpakete einen Parameter, der die Anzahl der vom Server übertragenen Datenpakete anzeigt, sowie einen weiteren Parameter, der die Nummer des jeweiligen Pakets innerhalb der Anzahl der vom Server übertragenen Datenpakete anzeigt, enthält.

## Claims

1. A communication system with WAP browser capability, comprising a server and a client communicating with each other utilizing a WAP protocol, wherein the client transmits a URL request having attached parameters to the server for requesting an offered service, and the server responds to the URL request by sending data packets, wherein the parameters attached to the URL request by the client comprise a binary data packet encoded for transmission including a Service-ID for identifying the requested service,
wherein the server transmits on request data packets to the client that in addition to the Service-ID for identifying the requested service comprise a device identifier of the client and an error detection code followed by binary payload data, and
wherein the data packets comprise a parameter indicating the number of data packets transmitted by the server as well as an additional parameter indicating the packet number of the respective data packet within the number of data packets transmitted by the server.

2. The communication system with WAP browser capability according to claim 1,
wherein the URL request including the attached parameters comprises at maximum 256 characters.

3. The communication system with WAP browser capability according to claim 1 or 2, wherein the parameters attached to the URL request comprise a Session-ID enabling a handshake procedure with the server.

4. The communication system with WAP browser capability according to claim 1 or 2, wherein the length of the user data is variable.

5. The communication system with WAP browser capability according to one of the claims 1 to 5, wherein the data packets sent from the server to the client comprise a plurality of bits that are arranged one after another as follows:
Service ID for identifying the requested service,
length of the device identifier of the client,
device identifier of the client,
a further reserved area for future applications,
number of data packets transmitted by the server
packet number of the respective package within the number of data packets transmitted by the server,
a Session-ID for identifying the session.

6. The communication system with WAP browser capability according to one of the claims 1 to 5, wherein the Service-ID has a predetermined bit length and enables the decoding of the remaining data contained in a data packet.

7. The communication system with WAP browser capability according to claim 5, wherein the Session ID has a variable length and is generated and determined by the server upon first request.

8. The communication system with WAP browser capability according to one of the claims 1 to 7, wherein one of the offered services is for searching destinations in the client's vicinity.

9. The communication system with WAP browser capability according to one of the claims 1 to 7, wherein one of the offered services is for querying the client's current position.

10. The communication system with WAP browser capability according to one of the claims 1 to 9, wherein upon requested the server sends MIME type data packets to the client.

11. The communication system with WAP browser capability according to one of the claims 1 to 10, the client is a terminal or part of a terminal within a vehicle's communication system.

12. The communication system with WAP browser capability according to claim 11, wherein the client is built into a car radio or navigation system.

13. A server for use in a communication system with browser capability, the communication system comprising the server and a client communicating with each other utilizing a WAP protocol,
the server being adapted to respond to the client's URL request comprising attached parameters for requesting an offered service by sending requested data packets, wherein the parameters attached to the URL request by the client comprise a binary data packet encoded for transmission including a Service-ID for identifying the requested service, and
wherein the server is adapted to transmit on request data packets to client that comprise in addition to the Service-ID for identifying the requested service, a device identifier of the client and an error detection code followed by binary coded payload data, and
wherein the data packets comprise a parameter indicating the number of data packets transmitted by the server as well as an additional parameter indicating the packet number of the respective data packet within the number of data packets transmitted by the server.

## Revendications

1. Système de communication compatible avec un navigateur WAP, comprenant un serveur et un client communiquant entre eux au moyen du protocole WAP, le client demandant au serveur un service proposé par un appel d'URL avec paramètres joints et le serveur répondant à l'appel d'URL par l'envoi de paquets de données, les paramètres joints par le client à l'appel d'URL contenant un paquet de données binaire, codé pour la transmission de données, avec un identificateur de service pour la reconnaissance du service demandé,
où le serveur transmet sur demande des paquets de données au client, lesquels contiennent, en plus de l'identificateur de service pour la reconnaissance du service demandé, un numéro d'appareil du client et un code d'identification d'erreur suivis de données utiles binaires codées,
où les paquets de données contiennent un paramètre indiquant le nombre de paquets de données transmis par le serveur, ainsi qu'un autre paramètre indiquant le numéro de paquet de chaque paquet à l'intérieur de la série de paquets de données transmis par le serveur.

2. Système de communication compatible avec un navigateur WAP selon la revendication 1, où l'URL est longue de 256 caractères au maximum, tous paramètres joints.

3. Système de communication compatible avec un navigateur WAP selon la revendication 1 ou la revendication 2, où un identificateur de session est transmis dans les paramètres joints à l'appel d'URL pour l'identification de la session, permettant une procédure de prise de contact avec le serveur.

4. Système de communication compatible avec un navigateur WAP selon la revendication 1 ou la revendication 2, où la longueur des données utiles est variable.

5. Système de communication compatible avec un navigateur WAP selon l'une des revendications 1 à 4, où les paquets de données adressés du serveur au client comportent une pluralité de bits successifs, ordonnés comme suit :
l'identificateur de service pour la reconnaissance du service demandé,
la longueur du numéro d'appareil du client,
le numéro d'appareil du client,
un autre champ réservé pour des applications futures,
le nombre de paquets de données transmis par le serveur,
le numéro de paquet de chaque paquet à l'intérieur de la série de paquets de données transmis par le serveur,
un identificateur de session pour l'identification de la session.

6. Système de communication compatible avec un navigateur WAP selon l'une des revendications 1 à 5, où l'identificateur de service a une largeur de bit définie, sur la base de laquelle un décodage des données restantes contenues dans le paquet de données peut être exécuté.

7. Système de communication compatible avec un navigateur WAP selon la revendication 5, où l'identificateur de session a une longueur variable, générée et fixée par le serveur au premier appel.

8. Système de communication compatible avec un navigateur WAP selon l'une des revendications 1 à 7, où l'un des services proposés est prévu pour la recherche de destinations localement proches du client.

9. Système de communication compatible avec un navigateur WAP selon l'une des revendications 1 à 8, où l'un des services proposés sert à demander la position actuelle du client.

10. Système de communication compatible avec un navigateur WAP selon l'une des revendications 1 à 9, où le serveur adresse sur demande des paquets de données de type MIME au client.

11. Système de communication compatible avec un navigateur WAP selon l'une des revendications 1 à 10, où le client est réalisé comme terminal ou partie d'un terminal à l'intérieur d'un système de communication d'un véhicule automobile.

12. Système de communication compatible avec un navigateur WAP selon la revendication 11, où le client est intégré à un autoradio ou à un système de navigation.

13. Serveur destiné à être utilisé dans un système de communication compatible avec un navigateur WAP, comprenant le serveur et un client, où le serveur est apte à communiquer avec le client au moyen du protocole WAP,
où le serveur est apte à répondre à l'appel d'URL par l'envoi de paquets de données, les paramètres joints par le client à l'appel d'URL contenant un paquet de données binaire, codé pour la transmission de données, avec un identificateur de service pour la reconnaissance du service demandé,
où le serveur est apte à transmettre sur demande des paquets de données au client, lesquels contiennent, en plus de l'identificateur de service pour la reconnaissance du service demandé, un numéro d'appareil du client et un code d'identification d'erreur suivis de données utiles binaires codées,
où les paquets de données contiennent un paramètre indiquant le nombre de paquets de données transmis par le serveur, ainsi qu'un autre paramètre indiquant le numéro de paquet de chaque paquet à l'intérieur de la série de paquets de données transmis par le serveur.
